# FASCICULE DE BREVET EUROPEEN

(11) **EP 0 484 847 B1**
(45) Date de publication et mention de la délivrance du brevet: **23.04.1997**
(21) Numéro de dépôt: 91118757.3
(22) Date de dépôt: 04.11.1991
(51) Int. Cl.: B04C 9/00, B04C 5/20

(54) **Cyclone de séparation par centrifugation d'un mélange de gaz et de particules solides avec récupération de chaleur**
Zyklon zur Zentrifugaltrennung eines Gemisches aus Gas und Feststoffteilchen mit Wärmerückgewinnung
Cyclone for separating by centrifugal force a mixture of gas and solid particles with heat recovery

(30) Priorité: 07.11.1990 FR 9013801
(43) Date de publication de la demande: 13.05.1992
(73) Titulaire: STEIN INDUSTRIE Société Anonyme dite:, F-78140 Vélizy Villacoublay (FR)
(72) Inventeur: Morin, Jean-Xavier, F-45170 Neuiville aux Bois (FR); Aubry, Jean, F-92350 Le Plessis Robinson (FR); Tessier, Jean-Paul, F-75015 Paris (FR)
(74) Mandataire: Weinmiller, Jürgen

(56) Documents cités:
- DE-C- 955 889
- GB-A- 108 710
- GB-A- 2 159 442
- US-A- 4 225 325
- US-A- 4 853 003
- US-A- 4 944 250

## Description

La présente invention concerne un cyclone de séparation par centrifugation d'un mélange de gaz et de particules solides en une fraction enrichie en particules et une fraction gazeuse pauvre en particules, comprenant une virole cylindrique disposée verticalement dans laquelle débouche tangentiellement une conduite d'introduction du mélange de gaz et de particules solides, des moyens d'évacuation de la fraction enrichie en particules situés dans la partie inférieure de la virole cylindrique, une conduite axiale d'évacuation de la fraction gazeuse dont l'extrémité supérieure est à un niveau sensiblement plus bas que le sommet de la virole cylindrique, mais à un niveau plus élevé que l'embouchure de la conduite d'introduction du mélange à séparer, et qui traverse le fond inférieur de la virole, la zone du cyclone comprise entre l'extrémité supérieure de la conduite axiale d'évacuation de la fraction gazeuse et son sommet formant une chambre d'expansion du mélange de gaz et de particules à séparer.

Un tel cyclone décrit dans le document DE-C-955 889 ne permet pas d'assurer un refroidissement préliminaire des particules solides ce qui permettrait lorsque ce cyclone est couplé avec un réacteur à lit fluidisé circulant de réduire les surfaces d'échange de chaleur dans ce réacteur.

De plus le cyclone connu n'assure qu'une séparation imparfaite des particules solides.

Le cyclone selon l'invention permettant d'améliorer cette séparation est caractérisé en ce qu'il comprend en outre des moyens d'introduction d'un gaz disposé dans la partie inférieure de la virole servant à fluidiser en lit dense la fraction enrichie en particules solides, des moyens d'échange de chaleur entre le lit fluidisé dense formé et un fluide à vaporiser et/ou réchauffer, des moyens permettant de régler le niveau du lit dense, et en ce que l'axe de la conduite d'introduction du mélange de gaz et de particules solides vu en direction de l'embouchure est incliné vers le bas par rapport à l'horizontale, de préférence d'un angle de 0° à 15°.

Dans le cyclone selon notre invention le mélange gaz particules est bien centrifugé sur la totalité de sa descente grâce à la présence de la conduite axiale.

De plus sur toute la hauteur entre l'embouchure de la conduite d'introduction du mélange et le sommet de la conduite axiale, on obtient une zone de séparation additionnelle dans laquelle la concentration des particules est déjà très nettement plus faible qu'à l'entrée et dans laquelle les écoulements de gaz et de particules vont dans le sens inverse des écoulements descendants.

Plus la conduite axiale est longue plus la densité des particules sera faible.

Enfin, dans l'espace libre entre le sommet du tube et le sommet de la virole, on a une zone à faible vitesse radiale de gaz et donc une diminution de l'effet d'entraînement des particules.

Il répond en outre de préférence à la caractéristique suivante :
les parois de la virole cylindrique et la conduite axiale d'évacuation sont constituées de parois de tubes liés entre eux par des ailettes soudées, ces tubes pouvant faire partie des moyens d'échange de chaleur (13).

Il est décrit ci-après, à titre d'exemple et en référence aux figures du dessin annexé, un cyclone selon l'invention.

La figure 1 le représente en coupe par un plan diamétral.

La figure 2 le représente en coupe partielle par un plan horizontal.

La figure 3 représente le détail III de la figure 2.

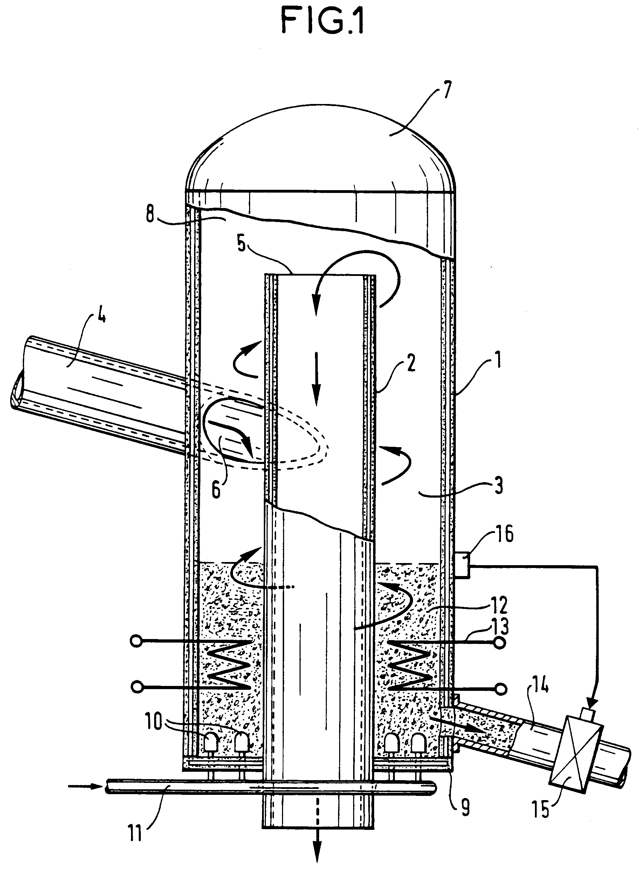

Dans la figure 1, le cyclone se compose d'une virole cylindrique externe 1 et d'une conduite axiale 2 d'évacuation du gaz appauvri en particules solides, délimitant une chambre annulaire 3. Une conduite 4 inclinée vers le bas, faisant avec l'horizontale un angle α entre 0° et 15°, assure l'introduction du mélange dé gaz et de particules solides à séparer dans la chambre 3.

Le bord supérieur 5 de la conduite d'évacuation 2 du gaz séparé est bien au-dessus de l'embouchure 6 de la conduite 4, de façon à ménager une zone de séparation entre le niveau de l'embouchure 6 et du bord supérieur 5 dans laquelle la concentration des particules est faible. Par ailleurs, le bord supérieur 5 est à une distance importante du sommet 7 de la virole 1, de façon à ménager une chambre d'expansion 8 dans laquelle le gaz perd pour l'essentiel son mouvement tourbillonnaire pour pénétrer axialement dans la conduite d'évacuation 2.

Les particules solides se concentrent à la périphérie de la virole 1 et se rassemblent dans le bas de l'espace annulaire 3. Le fond 9 de cet espace annulaire est muni de tuyères 10 d'injection d'un gaz de fluidisation, (typiquement des fumées recyclées), arrivant par un conduit 11. Il se forme au-dessus de ces tuyères 10 un lit fluidisé dense 12 de particules. Des tubes d'échange de chaleur, représentés schématiquement en 13, y sont immergés et assurent la récupération d'une partie de la chaleur véhiculée par les particules solides par échange de chaleur avec un fluide qui circule dans ces tubes. Les particules solides partiellement refroidies sont évacuées du bas de l'espace annulaire par un conduit 14.

Sur le conduit 14 est disposée une vanne réglable 15 dont l'ouverture est pilotée par un détecteur de niveau 16 du lit dense 12.

Le niveau du lit dense est réglé pour être nettement plus bas que l'embouchure 6 du conduit 4 mais pour être nettement au-dessus des tubes 13.

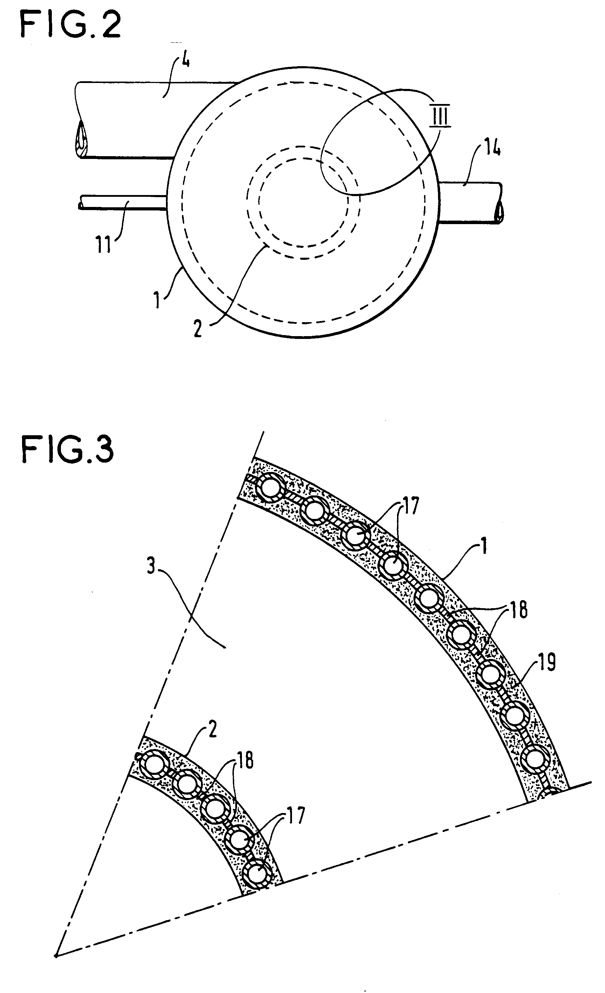

Les parois de la virole 1 du fond 9 et du conduit d'évacuation 2 peuvent éventuellement être constituées de tubes 17 parcourus par un fluide de refroidissement (voir figures 2 et 3). Ces tubes 17 sont liés entre eux par des ailettes soudées 18 et sont noyés dans une couche de ciment 19 les protégeant de l'érosion par les particules solides. Grâce à cette disposition, on évite des phénomènes d'agglomération des particules solides chaudes sur les parois.

En résumé, le cyclone objet de l'invention est constitué de trois zones de séparation du mélange gaz-particules : une zone primaire constituée en-dessous de l'embouchure d'arrivée (4) et au-dessus de la phase dense où s'effectue la majeure partie de la séparation par gravité et effet centrifuge et agglomération : une zone secondaire située au-dessus de la zone primaire jusqu'au sommet du tube de sortie des gaz épurés, caractérisée par une variation décroissante de la concentration en solides en fonction de la hauteur, également par effets gravitaires et centrifuges : une zone tertiaire au sommet de l'appareil où la vitesse des gaz subit une brusque diminution ayant pour effet de limiter l'entraînement des particules.

## Revendications

1. Cyclone de séparation par centrifugation d'un mélange de gaz et de particules solides en une fraction enrichie en particules et une fraction gazeuse pauvre en particules, comprenant une virole cylindrique (1) disposée verticalement dans laquelle débouche tangentiellement une conduite (4) d'introduction du mélange de gaz et de particules solides, des moyens (14) d'évacuation de la fraction enrichie en particules situés dans la partie inférieure de la virole cylindrique, une conduite axiale (2) d'évacuation de la fraction gazeuse dont l'extrémité supérieure (5) est à un niveau sensiblement plus bas que le sommet (7) de la virole cylindrique, mais à un niveau plus élevé que l'embouchure (6) de la conduite d'introduction du mélange à séparer, et qui traverse le fond inférieur (9) de la virole, la zone du cyclone comprise entre l'extrémité supérieure de la conduite axiale d'évacuation de la fraction gazeuse et son sommet (7) formant une chambre (8) d'expansion du mélange de gaz et de particules à séparer, caractérisé en ce qu'il comprend en outre des moyens (10, 11) d'introduction d'un gaz disposé dans la partie inférieure de la virole servant à fluidiser en lit dense (12) la fraction enrichie en particules solides, des moyens d'échange de chaleur (13) entre le lit fluidisé dense formé et un fluide à vaporiser et/ou réchauffer, des moyens (15, 16) permettant de régler le niveau du lit dense, et en ce que l'axe de la conduite (4) d'introduction du mélange de gaz et de particules solides vu en direction de l'embouchure est incliné vers le bas par rapport à l'horizontale, de préférence d'un angle de 0° à 15°.

2. Cyclone selon les revendications 1, caractérisé en ce que les parois de la virole cylindrique (1) et la conduite axiale d'évacuation (2) sont constituées de parois de tubes (17) liés entre eux par des ailettes soudées (18), ces tubes pouvant faire partie des moyens d'échange de chaleur (13).

## Claims

1. A cyclone for separating a mixture of gas and solid particles by centrifuging into a fraction that is enriched in particles and a gaseous fraction that is depleted in particles, the cyclone comprising a vertically disposed cylindrical vessel (1) into which a duct (4) for injecting the mixture of gas and solid particles opens out tangentially, means (14) for removing the fraction that is enriched in particles, which means are situated in the bottom portion of the cylindrical vessel, an axial duct (2) for removing the gaseous fraction, having a top end (5) which is substantially lower than the top (7) of the cylindrical vessel but higher than the opening (6) of the duct for injecting the mixture to be separated, and which passes through the bottom floor (9) of the vessel, the zone of the cyclone lying between its own top (7) and the top end of the axial duct for removing the gaseous fraction forming an expansion chamber (8) for the mixture of gas and particles to be separated, the cyclone being characterized in that it further comprises gas injection means (10, 11) disposed in the bottom portion of the vessel and serving to fluidize the solid particle enriched fraction as a dense fluidized bed (12), heat exchanger means (13) for exchanging heat between the dense fluidized bed that is formed and a fluid to be vaporized and/or reheated, and means (15, 16) for adjusting the level of the dense fluidized bed, and in that the axis of the duct (4) for injecting the mixture of gas and solid particles slopes downwards towards its opening, preferably at an angle lying in the range 0° to 15° relative to the horizontal.

2. A cyclone according to claim 1, characterized in that the walls of the cylindrical vessel (1) and of the axial removal duct (2) are constituted by walls of tubes (17) which are interconnected by welded-together fins (18), said tubes optionally forming part of the heat exchanger means (13).

## Patentansprüche

1. Zentrifugalzyklon zur Trennung eines Gemisches aus Gasen und Feststoffteilchen in einen mit Teilchen angereicherten und einen an Teilchen abgereicherten Anteil, mit einem senkrecht angeordneten zylindrischen Gefäß (1), in das tangential eine Zufuhrleitung (4) für das Gemisch aus Gas und Feststoffteilchen einmündet, mit Mitteln (14) zur Abfuhr des an Teilchen angereicherten Anteils im unteren Bereich des zylindrischen Gefäßes, mit einer zentralen Abfuhrleitung (2) für den an Teilchen abgereicherten Anteil, deren oberes Ende (5) deutlich unterhalb des oberen Endes (7) des zylindrischen Gefäßes, aber oberhalb der Einmündung (6) der Zufuhrleitung für das zu trennende Gemisch liegt und die den Boden (9) des Gefäßes durchquert, wobei die Zone des Zyklons zwischen dem oberen Ende der axialen Gasabfuhrleitung und dem oberen Ende (7) des Gefäßes eine Expansionskammer (8) für das zu trennende Gemisch aus Gas und Teilchen bildet, dadurch gekennzeichnet, daß der Zyklon außerdem Mittel (10, 11) zur Einspeisung eines Gases, die sich im unteren Bereich des Gefäßes befinden und zur Bildung einer dichten Wirbelschicht (12) des mit Feststoffteilchen angereicherten Anteils dienen, und Wärmeaustauschmittel (13) zwischen der gebildeten dichten Wirbelschicht und einem zu verdampfenden und/oder zu erhitzenden Fluid sowie Mittel (15, 16) enthält, die die Obergrenze der dichten Wirbelschicht zu regeln erlaubt, und daß die Achse der Leitung (4) für die Zufuhr des Gemisches aus Gas und Feststoffteilchen bezüglich der Waagrechten in Richtung der Mündung gesehen nach unten geneigt ist, vorzugsweise um einen Winkel von 0 bis 15°.

2. Zyklon nach Anspruch 1, dadurch gekennzeichnet, daß die Wände des zylindrischen Gefäßes (1) und der axialen Abfuhrleitung (2) von Röhrenwänden (17) gebildet werden, die miteinander über angeschweißte Rippen (18) verbunden sind, wobei diese Röhren Teil der Wärmeaustauschmittel (13) sind.
